# FASCICULE DE BREVET EUROPEEN

(11) **EP 0 425 323 B1**
(45) Date de publication et mention de la délivrance du brevet: **19.01.1994**
(21) Numéro de dépôt: 90402026.0
(22) Date de dépôt: 13.07.1990
(51) Int. Cl.: B65G 47/248

(54) **Procédé et dispositif pour l'orientation axiale et unidirectionnelle de pièces en forme de douille avec une paroi d'extrémité transversale**
Verfahren und Vorrichtung zur axialen und einseitig gerichteten Orientierung von buchsenförmigen Stücken mit einer transversalen Endwand
Method and device for the axial and unidirectional orientation of bush-like pieces with a transversal end-wall

(30) Priorité: 11.08.1989 FR 8910813
(43) Date de publication de la demande: 02.05.1991
(73) Titulaire: SA CELLIER GROUPE, 73100 Aix Les Bains (FR)
(72) Inventeur: Guillaume, Damien, F-74600 Seynod (FR)
(74) Mandataire: Kiliaridis, Constantin

(56) Documents cités:
- FR-A- 2 592 639
- US-A- 2 857 039
- US-A- 3 831 738
- US-A- 4 034 844

## Description

L'invention concerne un procédé et un dispositif pour l'orientation axiale et unidirectionnelle de pièces en forme de douille avec une paroi d'extrémité transversale.

Dans l'industrie de l'emballage et du conditionnement on est amené à remplir des tubes avec un contenu tel que médicament, produits alimentaires (épices, condiments, etc...), produits chimiques, pièces mécaniques (vis, etc...). A cet effet, on doit placer les tubes parallèlement à une même position c'est-à-dire avec d'une part leurs axes parallèles entre eux et, d'autre part, leurs ouvertures d'un même côté. Ainsi, pour le remplissage proprement dit les tubes sont placés verticalement, ouvertures en haut et, inversement, paroi d'extrémité transversale formant fond en bas. Ces tubes qu'ils soient réalisés en matière plastique ou en métal proviennent souvent d'un stockage en vrac, en aval ou postérieurement à leur fabrication. Un des problèmes qui se pose est celui de leur orientation unidirectionnelle convenable, à partir de ce stock, avec une cadence suffisante. Les techniques actuellement mises en oeuvre limitent les cadences, pour plusieurs raisons : le prélèvement des tubes depuis le stock a un débit limité; si ce prélèvement met en oeuvre un élévateur ou similaire associé à un bol vibrant ou non, on constate que les alvéoles recevant unitairement les tubes ne sont pas toutes remplies ce qui affecte le débit; les tubes mal orientés sont, le plus souvent, renvoyés au stock, pour être repris, au plus tard, aléatoirement, sans la certitude qu'ils seront alors bien orientés ce qui affecte également le débit.

Selon le document US-A-2857039, on oriente in situ les ampoules mal orientées se trouvant sur un convoyeur à alvéoles en forme d'anneau comportant également des ampoules convenablement orientées. Les ampoules ont deux parties extrêmes d'encombrements différents et des alvéoles de forme correspondant aux seules ampoules correctement orientées. Les préambules des revendications 1 et 9, concernant respectivement un procédé et un dispositif pour orienter axialement des pièces allongées, sont basés sur cet état de la technique.

Selon les documents US-A-4034844 et US-A-3831738, on oriente des bouteilles ayant deux parties extrêmes (respectivement le fond et le col) d'encombrements différents et on agit sur toutes les bouteilles, par le col, pour les amener à une même position intermédiaire.

On peut se référer également aux documents US-A-4802568 et FR-A-2592639.

Toutes ces techniques ne sont pas applicables à des pièces tels que des tubes légers et de petite dimension (tels que ceux utilisés pour emballer des médicaments) ayant deux parties extrêmes de même encombrement.

L'invention vise donc à surmonter les problèmes ou limites de l'état de la technique.

A cet effet, elle propose d'abord un procédé pour orienter axialement et unidirectionnellement des pièces de forme générale allongée ayant une paroi latérale et des extrémités transversales dont une avec une paroi transversale d'extrémité tels que des conteneurs formant tubes dans lequel à partir d'une amenée de pièces, on entraîne les pièces les unes à la suite des autres en les supportant par dessous dans des alvéoles d'avancement le long d'une direction d'avancement générale horizontale transversale par rapport aux axes sensiblement parallèles des pièces successives, on laisse avancer les pièces convenablement orientées sans modification d'orientation, et on retourne tête-bêche in situ seulement les pièces mal orientées pendant leur mouvement d'avancement en les guidant pour progressivement les faire pivoter autour d'axes parallèles à la direction d'avancement, caractérisé en ce qu'on met en oeuvre des pièces comportant chacune une paroi transversale d'extrêmité unique et à l'opposé une ouverture d'extrêmité pour d'abord, d'une part, la pousser axialement par la paroi transversale d'extrémité en direction de l'ouverture d'extrémité et, d'autre part, la soulever du côté de l'ouverture libre jusqu'à amener la pièce sensiblement verticalement; ensuite, continuer le mouvement de pivotement de la pièce pour dépasser cette position verticale; et, enfin, permettre à la pièce de retomber par son propre poids tête-bêche par rapport à son orientation initiale.

L'invention concerne également un procédé pour remplir des conteneurs, dans lequel les conteneurs sont d'abord orientés axialement (revendication 8).

Elle propose, ensuite un dispositif pour orienter axialement et unidirectionnellement des pièces de forme générale allongée ayant une paroi latérale et des extrémités transversales dont une avec une paroi transversale d'extrémité, tels que des conteneurs formant tubes, qui comprend une amenée de pièces, un convoyeur ayant des alvéoles d'avancement des pièces, entraîné par des moyens d'entraînement en continu formant des moyens d'entraînement des pièces les unes à la suite des autres avec leurs axes sensiblement parallèles les uns aux autres, et des moyens aptes à laisser avancer les pièces convenablement orientées et à retourner tête-bêche in situ les pièces mal orientées, caractérisé en ce que ces moyens comprennent d'une part des doigts portés par un dispositif d'entraînement, fonctionnant en synchronisme avec le convoyeur s'étendant de façon coaxiale par rapport à ses alvéoles en pénétrant par des ouvertures d'extrémité axiale de celles-ci et, d'autre part, des moyens de déplacement à coulissement axial des doigts entre deux positions extrêmes respectivement inactive et de pénétration où les doigts respectivement n'interfèrent pas avec les pièces et sont placés substantiellement dans les alvéoles pour soit pénétrer dans une pièce convenablement orientée par son ouverture, soit pousser une pièce mal orientée par son extrémité attenante à sa paroi transversale d'extrémité.

L'invention sera bien comprise grâce à la description qui suivra en référence aux dessins annexés dans lesquels :

La figure 1 est une vue schématique, en élévation verticale d'une installation de remplissage de tubes comportant le dispositif selon l'invention pour la mise en oeuvre du procédé.

La figure 2 est une vue partielle, de dessus du convoyeur à palettes pour le prélèvement des tubes depuis le stock.

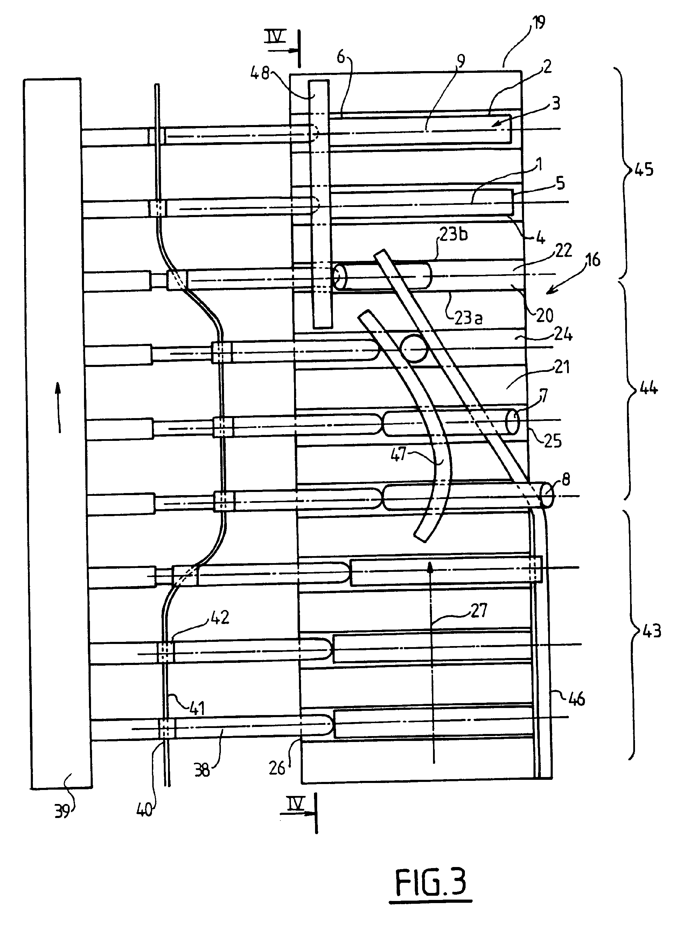

La figure 3 est une vue de dessus, schématique partielle, à plus grande échelle du dispositif d'orientation selon l'invention.

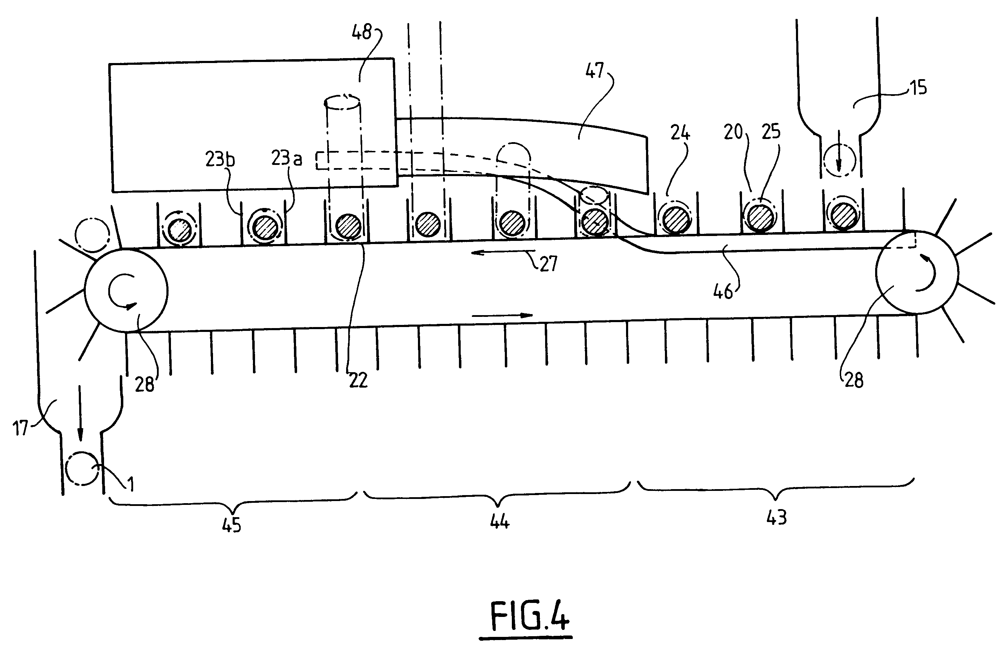

La figure 4 est une vue en coupe par un plan vertical du dispositif de la figure 3 selon la ligne IV - IV.

Les figures 5A, 5B, 5C, 5D, 5E, 5F, 5G et 5H sont huit vues schématiques en coupe par un plan vertical médian des alvéoles du dispositif selon l'invention, parallèlement à la ligne V - V de la figure 3.

La figure 6 est une vue schématique, partielle, en coupe, similaire à celle des figures 5A à 5H illustrant un doigt et son coulissement axial.

Les figures 7 et 8 sont deux vues schématiques, partielles, en coupe, similaire à celle des figures 5A à 5H et 6, illustrant un doigt, dans deux positions différentes de coulissement (respectivement en traits pleins et en tiretés), respectivement pour chacune des extrémités d'une pièce attenante, respectivement à sa paroi transversale d'extrémité et à son bord libre.

L'invention concerne un procédé et un dispositif pour orienter axialement et unidirectionnellement des pièces (1) en forme générale de douille - c'est-à-dire comprenant une paroi latérale (2) définissant un espace libre central (3) - ayant, à une première extrémité (4), une paroi transversale (5) pleine attenante fermant la paroi latérale (2) et comportant, à une seconde extrémité (6) un bord libre (7) définissant une ouverture (8) communicant avec l'espace (3). La pièce (1) comporte un axe général (9). Dans la forme de réalisation représentée la pièce (1) est réalisée en matière plastique ou en métal. Elle est de dimensions limitées, par exemple de l'ordre du centimètre pour le diamètre et de l'ordre de plusieurs centimètres pour la longueur axiale. Elle a donc un poids limité. Ces deux parties extrêmes sont d'encombrement semblable. En particulier, la seconde extrémité (6) est dépourvue de rétrécissement.

Comme exemple typique d'application, la pièce (1) est un tube formant conteneur pour un contenu tel que médicament, produit alimentaire, produit chimique, pièce mécanique ou autre.

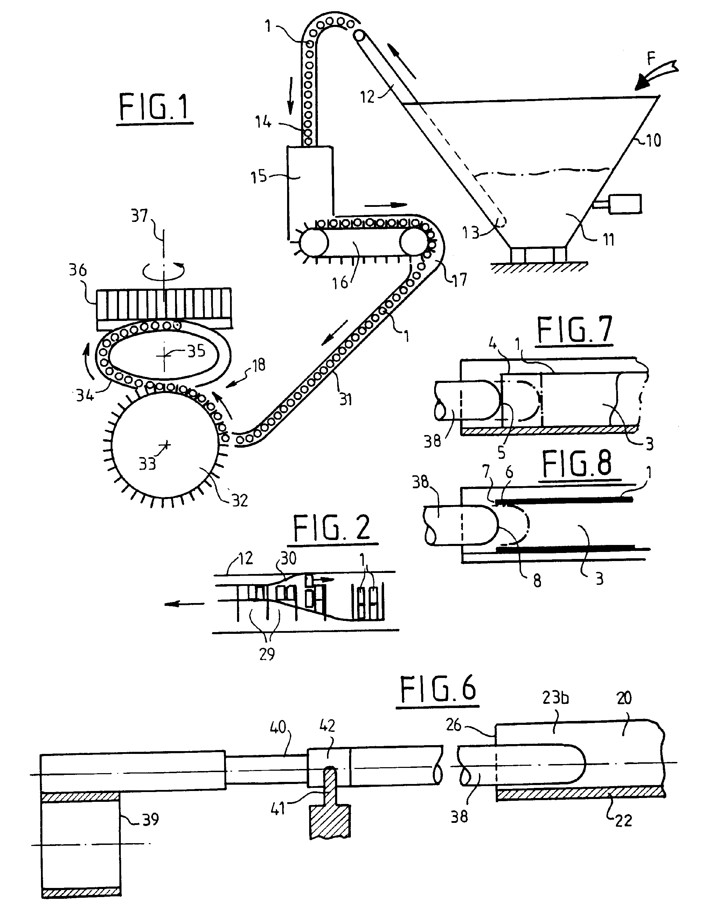

Les pièces (1), venues de fabrication, directement ou non, sont déversées dans une trémie (10) ou autre organe de stockage équivalent tel que bol d'alimentation ou réceptacle (flèche F figure 1). Elles se trouvent alors en vrac et forment un stock (11) représenté schématiquement sur la figure 1.

Les pièces (1) sont ensuite prélevées à partir du stock (11) au moyen d'un alimentateur (12) mobile qui, à son extrémité amont (13) plonge dans la trémie (10) et le stock (11) et à son extrémité aval (14) est relié, directement ou indirectement, via un stock tampon (15), à un dispositif (16) d'orientation des pièces (1), axialement et unidirectionnellement. En sortie (17) de ce dispositif (16) d'orientation, les pièces (1) sont amenées, de façon convenable, directement ou non, à un poste de traitement approprié (non représenté) tel qu'un poste de remplissage.

Préférentiellement, les pièces (1) ont, au poste de traitement ou remplissage, leurs axes (9) verticaux, les parois (2) étant placées en bas et les ouvertures (8) en haut (et par exemple coplanaires).

On entend par orientation axiale et unidirectionnelle, le fait que les pièces (1) aient leurs axes (9) sensiblement parallèles entre eux, leurs parois (2) toutes situées d'un même côté (et sensiblement coplanaires) et leurs ouvertures (8) toutes situées d'un autre même côté opposé à celui où se trouvent les parois (2).

Le dispositif (16) permet l'orientation axiale et unidirectionnelle avec les axes (9) horizontaux. Dans ce cas et pour l'application remplissage envisagée, il est prévu un dispositif (18) apte à permettre le passage des pièces (1) de leur axe (9) horizontal à leur axe (9) vertical, pour permettre le traitement ou remplissage envisagé.

Les pièces (1) sont entraînées les unes à la suite des autres, grâce à des moyens d'entraînement (19) faisant partie du dispositif (16), de manière que leurs axes (9) soient disposés parallèlement les uns aux autres. Les pièces (1) sont alors, aléatoirement bien ou mal orientées, une des deux orientations possibles étant convenable et l'autre non. On laisse avancer les pièces (1) convenablement orientées et on agit sur les pièces (1) mal orientées pour permettre une orientation convenable, ultérieure, et cela grâce aux moyens constituant le dispositif (16).

On retourne tête-bêche in situ seulement les pièces (1) mal orientées pendant leur mouvement d'avancement, le dispositif (16) comportant, à cet effet, des mêmes moyens communs, décrits ultérieurement en détail qui d'une part laissent avancer les pièces (1) bien orientées sans modifier leur orientation et, d'autre part, retournent, ainsi que mentionné, celles qui ne le sont pas.

Pour permettre un débit suffisant, on retourne les pièces mal orientées en continu, successivement pour les pièces successives. Plusieurs pièces mal orientées successives se trouvent, à un instant donné, dans plusieurs états de retournements successifs.

On entraîne positivement toutes les pièces (bien ou mal orientées) le long d'une direction (27) d'avancement générale horizontale transversale par rapport aux axes des pièces. On guide chaque pièce mal orientée pour assurer, progressivement, son pivotement autour d'axes parallèles à la direction d'avancement.

Pour assurer l'entraînement positif de la pièce le long de l'axe d'avancement, on supporte la pièce par dessous sans empêcher son retournement lorsque celui-ci est souhaité (pour les pièces mal orientées). Afin d'assurer de façon sûre et précise un positionnement des pièces (1) on place les pièces (1) dans des alvéoles (20) d'avancement des pièces, d'un convoyeur (21), entraîné par des moyens d'entraînement en continu non représentés tels que moteur ou moto-réducteur. Ces alvéoles (20) comportent un fond (22) et deux parois transversales (23) (parallèles aux axes 9). En section elles ont une forme générale de U et elles comportent des ouvertures de passage des pièces (24). De plus, elles comportent à leurs deux extrémités (le long des axes 9) des ouvertures respectivement distales (25) et proximales (26). Les alvéoles (20) ont une enveloppe en forme générale parallélépipédique. Une des parois, soit (23a) est amont et l'autre (23b) aval. L'ouverture (24) permet le passage (entrée ou sortie) d'une pièce (1) en direction transversale. Les ouvertures (25, 26) permettent le passage (entrée ou sortie) d'une pièce (1) en direction axiale.

Le fond (22) est préférentiellement horizontal ou sensiblement horizontal (les axes 9 des pièces ayant eux aussi cette direction générale horizontale), cela incluant une faible inclinaison, les pièces (1) ne devant pas être renversées ou quitter de façon impromptue les alvéoles (20), mais seulement lorsque cela est souhaité. Les fonds (22) des différentes alvéoles (20) sont généralement coplanaires, de même que les ouvertures (24, 25, 26) respectivement. Les ouvertures (25, 26) sont verticales. Cette situation correspond au cas où les axes des pièces et l'axe d'avancement sont placés sensiblement horizontalement. On se réfère, par la suite, à cette situation, bien que celle-ci soit particulière.

Pour faciliter ou garantir l'entraînement positif, les pièces (1) peuvent être poussées par les parois transversales amont (23a).

Les alvéoles (20) ont préférentiellement un encombrement correspondant à celui des pièces (1), afin que ces dernières soient placées dans les alvéoles sans jeu substantiel. Pour maintenir convenablement les pièces (1), les parois (23a, 23b) montent au-dessus des pièces (1) toutes entièrement logées dans les alvéoles (20). Ainsi que cela résulte de ce qui précède, les alvéoles ont leurs deux extrémités substantiellement semblables.

Les alvéoles (20) sont proches les unes des autres (le long de la direction (27) ) de la distance appropriée au débit souhaité et aux nécessités techniques. Soit les alvéoles (20) sont écartées les unes des autres par des espaces vides (28) (cas des figures), soit les alvéoles (20) se jouxtent, une paroi (23a) et une paroi (23b) de deux alvéoles (20) voisines étant confondues.

La direction d'avancement (27) est soit linéaire (cas de figure) soit circulaire. Dans le premier cas, le convoyeur (21) est avantageusement un tapis transporteur monté tendu entre des tambours (28) d'extrémité montés sur des axes (28a) horizontaux. Dans le second cas, le convoyeur (21) est avantageusement un disque rotatif autour d'un axe vertical.

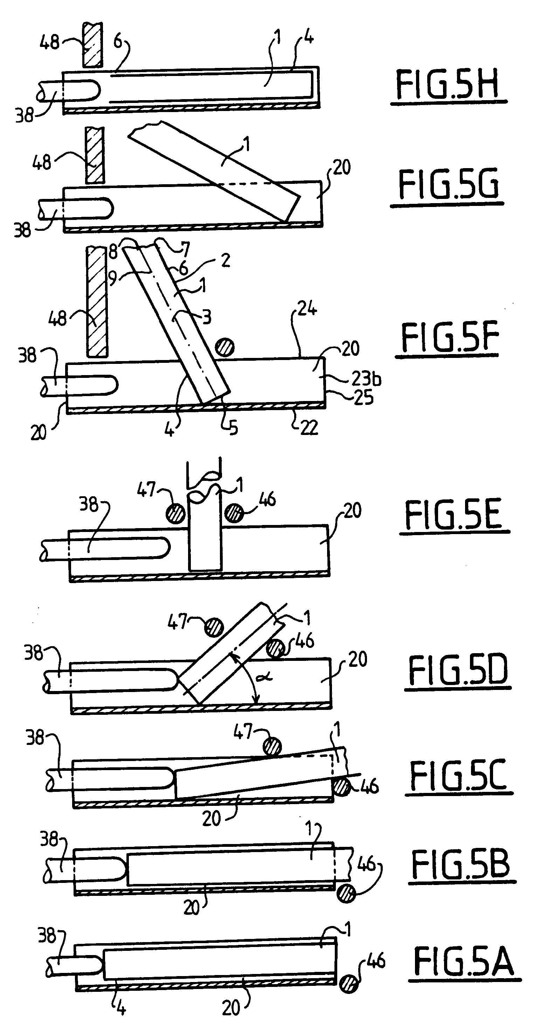

Pour assurer le pivotement d'une pièce (1) mal orientée, on agit sur celle-ci pour d'abord, d'une part, la pousser axialement par sa paroi transversale (5) d'extrémité en direction de son bord libre (7) ou ouverture (8), et d'autre part, la soulever du côté de son bord libre (7) ou ouverture (8) jusqu'à l'amener sensiblement verticalement l'ouverture (8) étant placée en haut; ensuite, on continue le mouvement de pivotement pour dépasser cette position intermédiaire verticale; et, enfin on permet à la pièce (1) de retomber par son propre poids. On peut se référer aux figures 5A à 5H qui illustrent ces étapes successives de retournement tête-bêche d'une pièce (1) mal orientée. Originellement (figure 5A) la pièce (1) est dans l'alvéole (20). Puis (figure 5B) la pièce (1) non convenablement orientée est seulement poussée axialement vers la seconde extrémité (6). Puis (figure 5C), la pièce (1) est simultanément glissée par sa première extrémité (4) sur le fond (22) en direction axiale et élevée vers le haut vers la seconde extrémité (6). Ce double mouvement correspondant à un pivotement autour d'un axe parallèle à la direction (27), glissant transversalement sur le fond (22) le long de l'axe (9) se poursuit, l'angle d'inclinaison α de la pièce (1) sur le fond (22) augmentant progressivement de 0° et environ 45° (figure 5D) puis enfin 90° environ (figure 5E). Dans ce dernier cas, la pièce (1) repose sur le fond (22) par la première extrémité (4) et la paroi (5). Après ce pivotement d'un quart de tour de la pièce (1), le pivotement est poursuivi d'un quart de tour supplémentaire autour d'un axe de pivotement glissant, comme précédemment. Les figures 5F et 5G montrent deux situations intermédiaires successives dans lesquelles l'angle α est respectivement de l'ordre de 120° et 150°. Enfin (figure 5H), la pièce (1) est de nouveau dans l'alvéole (20) retournée à 180° par rapport à la situation initiale de la figure 5A.

On cesse de pousser axialement sur la pièce (1) mal orientée sensiblement quand celle-ci est dans sa position intermédiaire verticale. Quand on pousse la pièce axialement on la fait glisser, axialement, par son extrémité (4) attenante à la paroi transversale d'extrémité (5), sur le fond (22) d'une alvéole d'avancement (20). On amène la pièce (1), dans sa position intermédiaire verticale, sensiblement dans la partie médiane de l'alvéole (20). Quand la pièce (1) retombe par son propre poids, on la fait glisser, axialement, par son extrémité (4) attenante à sa paroi transversale d'extrémité (5), sur le fond (22) d'une alvéole d'avancement (20) et par son extrémité (6) attenante à son bord libre (7) et à son ouverture (8) paroi guide (48). Les dispositions constructives qui précèdent ont pour effet que la pièce (1) retournée (figure 5H) occupe sensiblement la même place dans l'alvéole (20) qu'initialement (figure 5A). En variante et au moyen de guidage moins sophistiqué il y a déplacement axial de la pièce (1) dans l'alvéole (20) lors du retournement. Eventuellement après la phase de retournement il est alors prévu une phase de coulissement axial de la pièce (1) pour assurer son positionnement correct.

Pour permettre que toutes les alvéoles (20) successives soient originellement garnies de pièces (1), ce qui permet d'augmenter le débit, on met en oeuvre un alimentateur (12) à auges (29) qui est un convoyeur à palettes plongeant dans le stock de pièces, ces auges pouvant contenir au départ plusieurs pièces de front et on guide ensuite les pièces (1) pour que les auges ne contiennent qu'une seule pièce de front. On peut se référer à cet égard à la figure (2) sur laquelle sont illustrés les guides (30) agencés pour faire coulisser les pièces (1) de front en excès de un.

En sortie (17) du dispositif d'orientation (16), les pièces (1) toutes orientées dans le même sens peuvent coulisser transversalement dans une goulotte-guide (31) puis atteindre une première roue à godets (32) d'axe (33) horizontal avec laquelle coopère, en étant tangent au point haut supérieur, une deuxième roue à godets (34) d'axe (35) inclinée par exemple à 45° avec laquelle coopère, en étant tangent au point haut supérieur, une troisième roue à godets (36) d'axe (37) vertical.

Un procédé pour remplir des tubes (1) comporte la mise en oeuvre de l'orientation telle qu'elle vient d'être décrite. Puis les tubes sont pivotés de la position horizontale à la position verticale de remplissage.

Le dispositif (16) comporte d'une part des doigts (38) portés par un dispositif d'entraînement (39), fonctionnant en synchronisme avec le convoyeur (21) d'avancement des pièces (1), s'étendant par rapport aux alvéoles (20) d'avancement des pièces de façon coaxiale, en pénétrant par une ouverture d'extrémité axiale (26) de celles-ci et, d'autre part, des moyens (40) de déplacement à coulissement axial avec des doigts (38) entre deux positions extrêmes respectivement inactive et de pénétration où les doigts (38) respectivement n'interfèrent pas avec les pièces (1) et sont substantiellement placés dans les alvéoles (20) pour soit pénétrer dans une pièce (1) convenablement orientée par son ouverture (8), soit pousser une pièce (1) mal orientée par son extrémité (4) attenante à sa paroi transversale d'extrémité (5). Il y a autant de doigts (38) que d'alvéoles (20) actives dans la partie correspondante du convoyeur. La position inactive des doigts (38) est représentée sur les figures 5A et 5H. La position extrême de pénétration est représentée sur les figures 5D et 5E. On se réfère aux figures 7 et 8 qui montrent comment le doigt (38) appuie sur la paroi (5) en déplaçant, par suite de son coulissement, la pièce (1) (figure 7) et comment le doigt (38) pénètre dans l'ouverture (8) et l'espace (3) lorsque la pièce (1) est orientée convenablement.

Le dispositif d'entraînement (39) maintient les doigts (38) dans leur position relative axiale convenable; et les moyens (40) de déplacement à coulissement axial des doigts sont constitués par une rampe (41) à profil convenable avec laquelle coopèrent des pièces complémentaires (42) tel qu'un cavalier, attenantes aux doigts (38) (figure 6). D'autres dispositifs assurant simultanément le déplacement transversal et axial des doigts (38) peuvent être envisagés. Dans le cas où le convoyeur (21) est à bande, le dispositif d'entraînement (38) peut aussi être de type à bande ou à plaquette ou équivalent de manière à maintenir les axes des doigts (38) bien parallèlement à une référence fixe (les axes (9) ou les axes des alvéoles (20) ). Ce dispositif d'entraînement à bande peut être porté par deux tambours (43) entraînés par un moteur ou moto-réducteur non représenté.

Le dispositif (16) comporte plusieurs guides pour assurer le guidage convenable des pièces (1). A cet effet on se réfère, sur le convoyeur (21) à essentiellement trois tronçons successifs : le tronçon amont (43) (figures 5A à 5C), le tronçon médian (44) (figures 5D, 5E, 5F), le tronçon aval (45) (figures 5F, 5G, 5H). Le cas de la figure 5F correspond à la limite des tronçons aval et médian (45), (44).

Le dispositif (16) comporte un premier guide (46) des pièces (1) s'étendant sur le tronçon amont (43) du convoyeur (21) entre une situation latérale et inférieure vers l'amont et une situation médiane et supérieure vers l'aval, le tronçon aval (45) du convoyeur (21) étant libre du premier guide (46) verticalement au droit des alvéoles pour ne pas empêcher le retournement des pièces (1); le premier guide (46) ayant pour fonction de soulever les pièces (1) vers leur extrémité (6) attenante à leur bord libre (7). Le dispositif (16) comporte, ensuite un deuxième guide (47) des pièces (1) s'étendant dans le tronçon médian (44) du convoyeur (21) dans une situation médiane et supérieure, le deuxième guide (47) étant écarté du premier guide (46), vers l'aval, d'une distance permettant l'interposition, entre eux, de la pièce (1) sensiblement verticalement. Le deuxième guide (47) a pour fonction de maintenir l'extrémité (4) des pièces (1) attenantes à leurs parois d'extrémité transversales (5) contre le fond (22) des alvéoles (20). Les deux guides (46) et (47) sont donc placés de part et d'autre de la pièce (1). Le dispositif (16) comporte, ensuite un troisième guide (48) des pièces (1) s'étendant dans le tronçon aval (45) du convoyeur (21) dans une situation latérale et supérieure, sur une certaine hauteur. Le troisième guide (48) a pour fonction de permettre le guidage à coulissement vertical des pièces (1) par leur extrémité (6) attenante à leurs bords libres (7). Le premier guide (46) est situé, vers l'amont, du côté opposé à celui où se trouvent les doigts (38); le troisième guide (48) est situé du côté où se trouvent les doigts (38).

## Revendications

1. Procédé pour orienter axialement et unidirectionnellement des pièces (1) de forme générale allongée ayant une paroi latérale (2) et des extrémités transversales dont une avec une paroi transversale d'extrémité (5) tels que des conteneurs formant tubes dans lequel à partir d'une amenée de pièces, on entraîne les pièces les unes à la suite des autres en les supportant par dessous dans des alvéoles (20) d'avancement le long d'une direction d'avancement générale horizontale transversale par rapport aux axes (9) sensiblement parallèles des pièces successives, on laisse avancer les pièces convenablement orientées sans modification d'orientation, et on retourne tête-bêche in situ seulement les pièces mal orientées pendant leur mouvement d'avancement en les guidant pour progressivement les faire pivoter autour d'axes parallèles à la direction d'avancement, caractérisé en ce qu'on met en oeuvre des pièces comportant chacune une paroi transversale d'extrémité unique et à l'opposé une ouverture d'extrémité (8), pour d'abord, d'une part, la pousser axialement par la paroi transversale d'extrémité (5) en direction de l'ouverture d'extrémité (8) et, d'autre part, la soulever du côté de l'ouverture libre jusqu'à amener la pièce sensiblement verticalement; ensuite, continuer le mouvement de pivotement de la pièce pour dépasser cette position verticale; et, enfin, permettre à la pièce de retomber par son propre poids tête-bêche par rapport à son orientation initiale.

2. Procédé selon la revendication 1 caractérisé en ce qu'on amène les pièces entraînées les unes à la suite des autres et des doigts (38) à être sensiblement coaxiaux; on assure un déplacement axial relatif des pièces et des doigts (38) dans le sens de leur rapprochement; on permet à un doigt de pénétrer dans l'ouverture d'extrémité (8) d'une pièce bien orientée puis on retire le doigt de la pièce déjà bien orientée, sans modifier son orientation; on permet à un doigt de pousser axialement une pièce mal orientée par contact sur sa paroi d'extrémité (5) avec laquelle il interfère.

3. Procédé selon la revendication 1 caractérisé en ce que l'on cesse de pousser axialement sur la pièce sensiblement quand celle-ci est dans sa position intermédiaire verticale.

4. Procédé selon la revendication 1 caractérisé en ce que, quand on pousse la pièce axialement on la fait glisser, axialement, par son extrémité attenante à la paroi transversale d'extrémité, sur le fond de l'alvéole support et d'avancement.

5. Procédé selon la revendication 1 caractérisé en ce que l'on amène la pièce, dans la position verticale, sensiblement dans la partie médiane de l'alvéole support et d'avancement.

6. Procédé selon la revendication 1 caractérisé en ce que, quand la pièce retombe par son propre poids, on la fait glisser, axialement, par son extrémité attenante à sa paroi transversale d'extrémité, sur le fond de l'alvéole support et d'avancement et par son extrémité attenante à son ouverture d'extrémité sur une paroi guide.

7. Procédé selon la revendication 1 caractérisé en ce que l'on prélève les pièces à partir d'un stock de pièces en vrac dans des auges d'un convoyeur à palettes plongeant dans ce stock, ces auges pouvant contenir au départ plusieurs pièces de front et on guide ensuite les pièces pour que les auges ne contiennent qu'une seule pièce de front.

8. Procédé pour remplir des conteneurs formant tube avec un contenu dans lequel :
- on prélève des conteneurs (1) vides dans un stock (10) de conteneurs en vrac;
- on entraîne les conteneurs vides les uns à la suite des autres dans des alvéoles (20) support le long d'une direction d'avancement générale horizontale, transversale par rapport aux axes (9) parallèles des conteneurs successifs;
- on laisse avancer les conteneurs vides convenablement orientés;
- on retourne tête-bêche in situ les conteneurs vides mal orientés pendant leur mouvement d'avancement en les guidant pour assurer progressivement leur pivotement autour d'axes parallèles à la direction d'avancement et en poussant axialement sur leur paroi transversale d'extrémité (5) unique opposée à une ouverture d'extrémité opposée (8);
- on amène les conteneurs vides tous orientés dans le même sens à être placés sensiblement verticalement avec leur ouverture en haut en les faisant pivoter de leur position horizontale à leur position verticale de remplissage;
- et on remplit les conteneurs ainsi placés avec le contenu.

9. Dispositif pour orienter axialement et unidirectionnellement des pièces (1) de forme générale allongée ayant une paroi latérale (2) et des extrémités transversales dont une avec une paroi transversale d'extrémité (5), tels que des conteneurs formant tubes, qui comprend une amenée de pièces, un convoyeur (21) ayant des alvéoles (20) d'avancement des pièces, entraîné par des moyens d'entraînement en continu formant des moyens d'entraînement des pièces les unes à la suite des autres avec leurs axes (9) sensiblement parallèles les uns aux autres, et des moyens aptes à laisser avancer les pièces convenablement orientées et à retourner tête-bêche in situ les pièces mal orientées, caractérisé en ce que ces moyens comprennent d'une part des doigts (38) portés par un dispositif d'entraînement (39), fonctionnant en synchronisme avec le convoyeur (21) s'étendant de façon coaxiale par rapport à ses alvéoles (20) en pénétrant par des ouvertures d'extrémité axiale (26) de celles-ci et, d'autre part, des moyens (40) de déplacement à coulissement axial des doigts (38) entre deux positions extrêmes respectivement inactive et de pénétration où les doigts (38) respectivement n'interfèrent pas avec les pièces (1) et sont placés substantiellement dans les alvéoles (20) pour soit pénétrer dans une pièce (1) convenablement orientée par son ouverture (8), soit pousser une pièce (1) mal orientée par son extrémité (4) attenante à sa paroi transversale d'extrémité (5).

10. Dispositif selon la revendication 9 caractérisé en ce que le dispositif d'entraînement (39) maintient les doigts (38) dans leur position relative axiale convenable; et les moyens (40) de déplacement à coulissement axial des doigts comprennent une rampe (41) profilée convenablement avec laquelle coopèrent des pièces complémentaires (42), tel que des cavaliers, attenantes aux doigts (38).

11. Dispositif selon la revendication 9 caractérisé en ce qu'il comporte un premier guide (46) des pièces (1) s'étendant sur le tronçon amont (43) du convoyeur (21) entre une situation latérale et inférieure vers l'amont et une situation médiane et supérieure vers l'aval, le tronçon aval (45) du convoyeur (21) étant libre du premier guide (46) verticalement au droit des alvéoles pour ne pas empêcher le retournement des pièces (1); le premier guide (46) ayant pour fonction de soulever les pièces (1) vers leur extrémité (6) attenante à leur bord libre (7).

12. Dispositif selon la revendication 11 caractérisé en ce qu'il comporte un deuxième guide (47) des pièces (1) s'étendant dans le tronçon médian (44) du convoyeur (21) dans une situation médiane et supérieure, le deuxième guide (47) étant écarté du premier guide (46), vers l'aval, d'une distance permettant l'interposition, entre eux, de la pièce (1) sensiblement verticalement; le deuxième guide (47) ayant pour fonction de maintenir l'extrémité (4) des pièces (1) attenantes à leurs parois d'extrémité transversales (5) contre le fond (22) des alvéoles (20).

13. Dispositif selon la revendication 12 caractérisé en ce qu'il comporte un troisième guide (48) des pièces (1) s'étendant dans le tronçon aval (45) du convoyeur (21) dans une situation latérale et supérieure, sur une certaine hauteur; le troisième guide (48) ayant pour fonction de permettre le guidage à coulissement vertical des pièces (1) par leur extrémité (6) attenante à leurs bords libres (7).

14. Dispositif selon l'une quelconque des revendications 11 et 13 caractérisé en ce que le premier guide (46) est situé, vers l'amont, du côté opposé à celui où se trouvent les doigts (38); le troisième guide (48) est situé du côté où se trouvent les doigts (38).

## Patentansprüche

1. Verfahren um Objekte (1), wie tubenförmige Behälter, von allgemein länglicher Form, mit einer Seitenwand (2) und Querenden, von denen eines eine Querendwand (5) aufweist, axial und in dieselbe Richtung zu orientieren, in welchem, von einer Stückzufuhr aus, man die Objekte nacheinander mitnimmt, indem man sie von unten her in Vorwärtsbewegungszellen (20) aufstützt, längs einer allgemein horizontalen Fortbewegungsrichtung, welche quer gegenüber denen, im wesentlichen parallelen Achsen (9) der aufeinanderfolgenden Objekte ist, man die richtig orientierten Objekte ohne Orientierungsänderung fortfahren lässt, und man nur die falsch orientierten Objekte kopfüber, in situ, während ihrer Vorwärtsbewegung dreht, indem man sie in solcher Weise führt, dass sie progressiv um, zur Fortbewegungsrichtung parallelen Achsen drehen, dadurch gekennzeichnet, dass man auf Objekte mit jeweils einer einzigen Querendwand (3) und einer entgegengelegenen Endöffnung (8) einwirkt, dass man sie einerseits zuerst axial durch die Querendwand (5) in Richtung der Endöffnung (8) schiebt, und sie andererseits an der Seite der freien Endöffnung anhebt um sie wesentlich vertikal zu stellen; danach die Schwenkbewegung des Objekts weiter über diese vertikale Stellung hinaus führt; und endlich das Objekt durch sein eigenes Gewicht, kopfüber gegenüber seiner anfänglichen Orientierung, fallen lässt.

2. Verfahren gemäss Anspruch 1, dadurch gekennzeichnet, dass man die hintereinander geführten Objekte und Finger (38) im wesentlichen koaxial stellt; man eine gegenseitige axiale Bewegung der Objekte und der Finger (38) bewirkt; man einem Finger erlaubt, in die Endöffnung (8) eines richtig orientierten Objektes einzudringen und man den Finger aus dem schon richtig orientierten Objekt zurückzieht, ohne dessen Orientierung zu ändern; man einem Finger erlaubt, ein schlecht orientiertes Objekt, durch Kontakt auf seine Endwand (5), die er berührt, axial zu schieben.

3. Verfahren gemäss Anspruch 1, dadurch gekennzeichnet, dass man aufhört, das Objekt axial zu schieben, wesentlich wenn dieses sich in seiner vertikalen Zwischenstellung befindet.

4. Verfahren gemäss Anspruch 1, dadurch gekennzeichnet, dass, während man das Objekt axial schiebt, man es axial, mit seinem an der Querendwand liegenden Ende, auf dem Boden der tragenden und fortbewegenden Zelle gleiten lässt.

5. Verfahren gemäss Anspruch 1, dadurch gekennzeichnet, dass man das Objekt, in der vertikalen Stellung, wesentlich in den mittleren Teil der tragenden und fortbewegenden Zelle bringt.

6. Verfahren gemäss Anspruch 1, dadurch gekennzeichnet, dass, wenn das Objekt unter seinem eigenen Gewicht fällt, man es mit seinem, an der Querendwand liegenden Ende, axial auf dem Boden der tragenden und fortbewegenden Zelle gleiten lässt und mit seinem, an der Endöffnung liegenden Ende, auf einer Führungs- und Fortbewegungsfläche gleiten lässt.

7. Verfahren gemäss Anspruch 1, dadurch gekennzeichnet, dass man die Objekte aus einem Lager von lose liegenden Objekten in die Mulden eines Becherförderers, welcher in diesen Lagerstock eintaucht, aufnimmt, wobei diese Mulden anfänglich gleichzeitig mehrere Objekte enthalten können, und dass man danach die Objekte so führt, dass die Mulden jeweils nur ein Objekt enthalten.

8. Verfahren um tubenförmige Behälter mit einem Inhalt zu füllen, in welchem :
- man leere Behälter (1) in einem Lagerstock (10) von lose liegenden Behältern entnimmt;
- man die leeren Behälter nacheinander, in tragenden Zellen (20), längs einer allgemein horizontalen Vorwärtsbewegungsrichtung führt, wobei diese Richtung quer gegenüber den parallelen Achsen (9) der aufeinanderfolgenden Behälter ist;
- man die richtig orientierten leeren Behälter weiterfahren lässt;
- man die schlecht orientierten leeren Behälter kopfüber, in situ, während ihrer Vorwärtsbewegung umkehrt, indem man sie in solcher Weise führt, dass sie progressiv um, zu der allgemeinen Bewegungsrichtung parallele Achsen drehen, und indem man, in axialer Richtung auf ihre einzige Querendwand (5), welche einer entgegengesetzten Endöffnung (8) entgegengesetzt liegt, drückt;
- man die leeren, alle in dieselbe Richtung orientierten Behälter in eine wesentlich vertikale Position mit der Oeffnung nach oben bringt, indem man sie von ihrer horizontalen Position in ihre vertikale Füllstellung schwenkt;
- man die so gestellten Behälter mit dem Inhalt füllt.

9. Vorrichtung um Objekte (1), wie tubenförmige Behälter, von allgemein länglicher Form mit einer Seitenwand (2) und Querenden, wovon das eine eine Endquerwand (5) aufweist, axial und in dieselbe Richtung zu orientieren, mit einer Objektzufuhr, einem Beförderer (21) mit Zellen (20) zur Vorwärtsbewegung der Objekte, der durch kontinuierliche Antriebsmittel angetrieben ist, wodurch Beförderungsmittel gebildet werden, welche die Objekte, die einen nach den anderen, mit wesentlich parallelen Achsen (9) zueinander befördern, und mit Mitteln, die im Stande sind, die richtig orientierten Objekte sich vorwärts bewegen zu lassen und die falsch orientierten Objekte kopfüber in situ umzudrehen, dadurch gekennzeichnet, dass diese Mittel einerseits Finger (38) aufweisen, die von einer Antriebsvorrichtung (39) getragen werden, welche synchron mit dem Beförderer (21) arbeitet und sich koaxial zu seinen Zellen (20) erstreckt, und die in axiale Endöffnungen (26) derselben eindringen und andererseits Verschiebungsmittel (40) zum axialen Gleiten der Finger (38) aufweisen, zwischen zwei extremen Positionen, jeweils eine inaktive Position und eine Eindringsposition, wo die Finger (38) jeweils nicht auf die Objekte (1) einwirken und jeweils im wesentlichen in den Zellen (20) stehen um entweder in ein richtig orientiertes Objekt (1) durch seine Oeffnung (8) einzudringen oder ein falsch orientiertes Objekt (1) an seinem Ende (4), das an der Endquerwand (5) liegt, zu schieben.

10. Vorrichtung nach Anspruch 9, dadurch gekennzeichnet, dass die Beförderungsvorrichtung (39) die Finger (38) in der richtigen relativen axialen Position hält, und dass die Beförderungsmittel (40) zum axialen Gleiten der Finger eine entsprechend profilierte Rampe (41) aufweisen, mit welcher zusätzliche Teile (42), wie Reiterchen, neben den Fingern (38), zusammenwirken.

11. Vorrichtung gemäss Anspruch 9, dadurch gekennzeichnet, dass sie ein erstes Führungsteil (46) für die Objekte (1) aufweist, das sich über den oberen Teil (43) des Beförderers (21) erstreckt, zwischen einer seitlichen, unteren Gegend, stromaufwärts, und einer mittigen oberen Gegend stromabwärts, wobei der stromabwärtige Teil (45) des Beförderers scheitelrecht gegenüber den Zellen, frei von dem ersten Führungsteil (46) liegt, um die Umkehrung der Objekte (1) nicht zu hindern; wobei das erste Führungsteil (46) dazu bestimmt ist, die Objekte (1) an ihrem Ende (6) nahe ihrem freien Rand (7) anzuheben.

12. Vorrichtung gemäss Anspruch 11, dadurch gekennzeichnet, dass sie ein zweites Führungsteil (47) für die Objekte (1) aufweist, das sich im mittleren Teil des Beförderers (21) erstreckt, in einer mittigen und oberen Gegend, wobei der zweite Führungsteil (47) stromabwärts vom ersten Führungsteil (46) von einer Distanz auseinander liegt, die es erlaubt, zwischen ihnen das Objekt (1) im wesentlichen vertikal zu stellen; wobei das zweite Führungsteil (47) dazu dient, das an den Endquerwänden (5) liegende Ende (4) der Objekte (1) gegen den Boden (22) der Zellen (20) zu halten.

13. Vorrichtung gemäss Anspruch 12, dadurch gekennzeichnet, dass es ein drittes Führungsteil (48) für die Objekte (1) aufweist, das sich im stromabwärtigen Teil (45) des Beförderers (21) auf einer gewissen Höhe in einer seitlichen und höheren Gegend erstreckt; wobei der dritte Führungsteil (48) dazu dient, die Führung beim vertikalen Gleiten der Objekte (1) an ihrem, neben ihren freien Rändern (7) liegenden Ende (6) zu erlauben.

14. Vorrichtung gemäss irgendeinem der Ansprüche 11 und 13, dadurch gekennzeichnet, dass sich das erste Führungsteil (46) stromaufwärts auf der Endseite, die den Fingern (38) gegenüberliegt, befindet, wobei das dritte Führungsteil (48) auf derselben Seite wie die Finger (38) liegt.

## Claims

1. Procedure for the axial and unidirectional alignment of pieces (1) of generally elongated form having a lateral wall (2) and transverse extremities, one of which having a transverse extremity wall (5) such as containers in the form of tubes, in which from a piece feeder, the pieces are carried along one after the other supported in feed cells in a feed direction generally horizontal transverse with respect to the approximately parallel axes (9) of the successive pieces, the suitably aligned pieces being allowed to advance and the reversal insitu of only those pieces which are incorrectly aligned, whilst advancing, by guiding them so as to progressively pivot them about their axes parallel to the direction of feed, characterised by the fact that pieces are employed which each have a single transverse extremity wall with opposite, an extremity aperture (8) in order initially firstly to push it axially by the transverse extremity wall (5) in the direction of the extremity aperture (8) and secondly to lift it from the side of the free aperture to bring the piece approximately vertical; then to continue the pivoting movement of the piece past this vertical position; and finally, to allow the piece to fall by its own weight, reversed with respect to its initial alignment.

2. Procedure according to claim 1, characterised by the fact that the pieces carried along one after the other and the fingers (38) are brought approximately coaxial; a relative axial movement of the pieces and the fingers (38) being provided in their approach direction; one finger being allowed to penetrate the extremity aperture (8) of a correctly aligned piece, the finger then being withdrawn from the piece already correctly aligned, without changing its alignment; a finger being allowed to axially push an incorrectly aligned piece by contact with its extremity wall (5) against which it impinges.

3. Procedure according to claim 1, characterised by the fact that the axial pushing ceases when the piece is in the intermediate vertical position.

4. Procedure according to claim 1, characterised by the fact that when the piece is pushed axially it is caused to slide, axially, by its extremity contiguous to the transverse extremity wall, on the bottom of the support and feed cell.

5. Procedure according to claim 1, characterised by the fact that the piece is brought, in the vertical position, approximately in the central part of the support and feed cell.

6. Procedure according to claim 1, characterised by the fact that when the piece falls by its own weight, it is caused to slide, axially, by its extremity contiguous to its transverse extremity wall, on the bottom of the support and feed cell and by its extremity contiguous to its extremity aperture on a guide wall.

7. Procedure according to claim 1, characterised by the fact that the pieces are taken from a stock of pieces loose in the troughs of a pallet conveyor entering into this stock, these troughs are able to initially contain several front pieces, the pieces subsequently being guided so that the troughs contain only one front piece.

8. Procedure for filling the tubular containers with contents in which :
- the empty containers (1) are taken from a stock of containers (10) in bulk;
- the empty containers are carried along one after the other in support cells (20) in a feed direction generally horizontal transverse with respect to the parallel axes (9) of the successive containers;
- the containers suitably aligned are allowed to advance;
- the empty containers which are incorrectly aligned are reversed insitu, whilst advancing, by being guided so as to progressively pivot them about their axes parallel to the direction of feed, pushing axially on their single transverse extremity wall (5) opposite to an extremity aperture (8);
- the empty containers, all aligned in the same direction are brought to an approximately vertical position with their aperture upwards by pivoting them from the horizontal to their vertical filling position;
- the containers so positioned are filled with their contents.

9. Device for the axial and unidirectional orientation of pieces (1) of a generally elongated form having a lateral wall (2) and transverse extremities, one of which has a transverse extremity wall (5) such as containers in the form of tubes, which comprises a piece feeder, a conveyor (21) with feed cells (2), activated by a continuous drive forming the means of carrying the pieces along one after the other with their axes approximately parallel and a suitable means of allowing pieces suitably aligned to advance and reversing insitu any pieces which are incorrectly aligned, characterised by the fact that the means comprises on the one hand, fingers (38) carried by a drive system (39) which runs in synchronism with the conveyor (21), extending in coaxial fashion with respect to its cells (20), penetrating it via its axial extremity apertures (26), and on the other hand the means (40) for the axial sliding movement of the fingers (38) between two extreme positions, respectively inactive and penetration, in which the fingers (38) respectively do not interfere with the pieces (1) and are positioned substantially in the cells (20) either to penetrate a piece (1) suitably aligned via its aperture (8), or to push a piece (1) incorrectly aligned by its extremity (4) continuous to its transverse extremity wall (5).

10. Device according to claim 9, characterised by the fact that the drive system (39) maintains the fingers (38) in their suitable relative axial position; and the means (40) for the axial sliding movement of the fingers comprising a ramp (41) suitably profiled, with which additional pieces (42) cooperate, such as riders, contiguous to the fingers (38).

11. Device according to claim 9, characterised by the fact that it comprises a first guide (46) for the pieces (1) extending over an upstream section (43) of conveyor (21) between a lateral and low position in the upstream direction and a position central and high in the downstream position, the downstream section (45) of conveyor (21) being free of the first guide (46) vertically to the right of the cells so as not to prevent the reversal of the pieces (1); the function of the first guide (46) being to lift the pieces (1) towards their extremity (6) contiguous with their free edge (7).

12. Device according to claim 11, characterised by the fact that it comprises a second guide (47) for the pieces (1) extending in a central section (44) of conveyor (21) in a central and high position, the second guide (47) being distant in the downstream direction sufficiently to permit the interposition between them of the piece (1) approximately vertical; the function of the second guide (47) being to maintain the extremity (4) of pieces (1) contiguous to their transverse extremity walls (5) against the bottom (22) of the cells (20).

13. Device according to claim 12, characterised by the fact that it comprises a third guide (48) for the pieces (1) extending in the downstream section (45) of conveyor (21) in a lateral and high position, over a certain height; the function of the third guide being to permit the vertical sliding guidance of the pieces (1) by their extremity (6) contiguous to their free edges (7).

14. Device according to any of claims 11 and 13, characterised by the fact that the guide (46) is situated in the upstream direction, on the opposite side to the fingers (38); the third guide (48) being situated on the same side as the fingers (38).
